# EUROPEAN PATENT SPECIFICATION

(11) **EP 3 541 557 B1**
(45) Date of publication and mention of the grant of the patent: **30.10.2024**
(21) Application number: 17809386.0
(22) Date of filing: 14.11.2017
(51) Int. Cl.: B23G 1/18, B23G 1/48, B23Q 7/12, B07C 5/36

(54) **TAPPING MACHINE FOR SCREW THREADING OF PERFORATED PRODUCTS PROVIDED WITH A CENTRING DEVICE**
GEWINDESCHNEIDMASCHINE ZUM GEWINDESCHNEIDEN VON PERFORIERTEN PRODUKTEN MIT EINER ZENTRIERVORRICHTUNG
MACHINE À TARAUDER DE FILETAGE DE PRODUITS PERFORÉS ÉQUIPÉE D'UN DISPOSITIF DE CENTRAGE

(30) Priority: 15.11.2016 IT 201600115121
(43) Date of publication of application: 25.09.2019
(73) Proprietor: Nippon Tapper Co., Ltd., Tokyo 143-0012 (JP)
(72) Inventor: VESCOVINI, Federico, 33100 Udine (IT)
(74) Representative: Sandri, Sandro
(86) International application number: PCT/IB2017/057100
(87) International publication number: WO 2018/092021

(56) References cited:
- EP-A1- 2 743 019
- WO-A2-2009/057962
- CN-A- 105 478 927
- DE-A1- 19 527 406
- JP-B1- 2 891 980
- KR-B1- 100 352 458
- US-A- 1 887 649
- US-A- 1 918 290
- US-A- 2 115 599
- US-A- 3 677 401
- US-A1- 2014 346 095

## Description

### FIELD OF APPLICATION

The present invention relates to an anti-vibration and centring device applicable on screw threading means of perforated products such as (metallic) nuts, bushings or the like. In particular, the invention relates to a tapping machine according to the preamble of independent claim 1, which is known from document WO 2009/057962 A2.

In greater detail, the present invention relates to a device of a pliers type or the like which is introduced on a screw threading element adapted to realise a determined threading on said nuts.

The type of screw threading of the invention relates to all such tapping machines and in particular those having a through-tapping by the tapping tool, i.e. the tapping tool enters from one side of the machine tool and exits on the opposite side by means of a stem which releases the machined product.

The tapping tool can have various geometries according to the application, for example with an umbrella-style curved stem or with a straight stem or another type.

Said device can be positioned in proximity of the machine tool constituted by said tapping element, so as to interfere with the element and correct any out-of-axis conditions which inevitably compromise the result and the quality of the finished product.

The invention finds main application in the field of the metalworking industry and constructions in general and in particular in the field of realisation of fixing systems with main applications in the automobile, nuclear and aerospace sectors, and others besides.

### PRIOR ART

In the prior art traditional nuts are generally realised using tapping machines provided with a spindle on which a tool, known as a tapping tool having a threading to be inserted inside the hole afforded in each nut, is rotatably mounted.

According to a known solution in the sector the chuck is set in rotation by an electric motor, coupled to the rotating member by means of a cogged belt or a chain, or the like.

In the traditional solution each nut is brought to the inlet threading of the tapping tool by a translation movement induced by a hydraulic or pneumatic cylinder, or a mechanical cam, or another element, which guide each nut to press with a predetermined force so that the tapping tool can carry out the threading operation, and then return it rapidly into a pre-loading position for positioning a new nut to be threaded.

Conventional tapping machines are normally used at industrial level and have some drawbacks and disadvantages inasmuch as in the rotation of the tapping tool in the spindle there is considerable vibration which does not enable optimal centring of the product to be machined, causing a phenomenon known in the sector as RUN-OUT, with a consequent non-homogeneous wear on the tapping tools, which therefore have to be frequently replaced, as well as a not-entirely satisfactory overall quality of the products realised, which implicates formation of a certain amount of rejects during the machining.

Effectively these out-of-axis issues and the consequent vibrations of the tapping tool cause a certain degree of imprecision during the machining steps that can limit the quality of the finished product as the vibrations on the inserting of the product lead to chipping of the first turns of the tapping tool which, in the worst cases, can lead to faulty situations that derive from the action of the tool which operates out-of-axis and can even end in breakage, with possible damage also to the machine equipment and other consequences that are entirely unforeseeable.

Document WO2009/057962 A2 and document KR10-0352458 describe a machine for tapping metallic nuts provided with an anti-vibration and centring device according to the preamble of claim 1 of the present patent application. The anti-vibration and centring device is mounted fixed on the base of the machine and is consequently not adaptable to different work situations, such as for example for tapping tools having different lengths or having shafts of differing lengths. Therefore the respective operations of centring and anti-vibration are not optimal if not for a single predetermined length of both the tool and the stem, with the result that it is not always possible to ensure an excellent quality of the finished product.

### DESCRIPTION OF THE INVENTION

The present invention sets out to provide an anti-vibration and centring device applicable on tapping means on pierced products such as nuts, bushings or other parts having a special form, obtaining optimal work conditions able to eliminate or at least reduce the above-described drawbacks.

The present invention in particular relates to providing an anti-vibration and centring device applicable on tapping means of metallic nuts that is of simple conception and application and which enables obviating the problem of vibrations of the tapping tool.

A further aim of the invention is to provide a kit that can be applied to tools already in use as the kit perfectly integrates with existing tapping machines.

This is obtained with an anti-vibration and centring device of the type described in the foregoing, having the further characteristics described in the characterising part of the main claim.

The dependent claims of the present solution delineate advantageous embodiments of the invention.

According to the invention the tapping means is intercepted by an anti-vibration and centring device which intervenes in the steps in which the tool is about to enter into contact with the nut so as to tap the nut, and retracts in the steps in which the nut is advancing along the tapping tool towards the collecting group.

The intervention of the anti-vibration and centring device enables the tool to remain constrained only in the radial direction, but free to rotate to carry out the tapping of the nut, thus preventing vibrations in the crucial steps of the engagement with the nut.

In compliance with an important characteristic of the invention, the anti-vibration and centring device is mounted mobile in straight translation along a parallel direction to the longitudinal axis of the tapping tool, which enables arranging the device in an optimal position for the respective centring and anti-vibration operations, taking into account the length of the stem of the tapping tool and the length of the tapping head, thus obtaining an excellent anti-vibration and centring operation, which in turn results in a production of metallic nuts of a higher quality and more constant with respect to the productions obtainable with the known machines of the prior art.

In a first embodiment of the invention the anti-vibration and centring device is mounted on a mobile frame on slides running on guides fixed to the base of the machine.

According to a second embodiment of the invention, the anti-vibration and centring device is mounted on guides fixed to the mobile carriage of the tapping machine.

Definitively the tapping machines mounting the anti-vibration and centring device of the invention include the use of a technology directed at reducing the vibrations of the tapping tool to a minimum and thus centring the tapping tool with the interaxis of the hole of the product to be machined, which is introduced to the tapping tool in a very precise way, thus guaranteeing excellent machining right from the start of the tapping.

This solution also enables obtaining excellent and very precise machining on various geometries of pierced products such as nuts, bushings, special products and more besides, and on very varied materials, even very tough ones such as, for example, stainless steel, or very soft ones such as aluminium, thus in all cases guaranteeing a higher quality of tapping from one hand and on the other hand a longer working life of the tool.

### ILLUSTRATION OF THE DRAWINGS

Further characteristics and advantages of the invention will be evident from reading the following description of an embodiment of the invention by way of non-limiting example with the aid of the figures illustrated in the appended tables of drawings, in which:
- figure 1 is a schematic view of a traditional tapping tool subject to the "run-out" phenomenon;
- figure 2 is a schematic lateral view of a tapping machine for tapping metallic nuts on which an anti-vibration centring group is installed according to the invention, illustrated in an anti-vibration work step;
- figure 3 is a detailed view of an anti-return device for retaining the nuts machined by the tapping tool;
- figure 4 is a view of the tapping machine in a step in which a nut is about to enter into contact with a tapping tool while the anti-vibration and centring group tightens about the shaft of the tapping tool;
- figure 5 is a schematic view of the tapping machine in a subsequent work step in which the tapping tool has entered totally into the nut being machined while the anti-vibration centring group is open for enabling an imminent passage of the machined nut;
- figure 6 is a schematic view of the tapping machine in a further work step in which the tapping tool has terminated the threading of the nut while the anti-vibration centring group is open for allowing the passage of the machined nut, in the same way as the anti-return device for retaining the nuts in the open position for enabling passage;
- figures 7 and 8 are two axonometric views of a tapping machine provided with the anti-vibration and centring device according to the present invention, respectively arranged in two limit positions with respect to the position of the axis of the tapping tool;
- figures 9, 10 and 11 are lateral section views of a tapping machine provided with the anti-vibration and centring device according to the present invention, respectively arranged in two limit positions with respect to the position of the axis of the tapping tool;
- figures 12 and 13 are two partly-sectioned front views of an additional nut-selecting device usable in a tapping machine provided with an anti-vibration and centring device according to the present invention.

### DESCRIPTION OF AN EMBODIMENT OF THE INVENTION

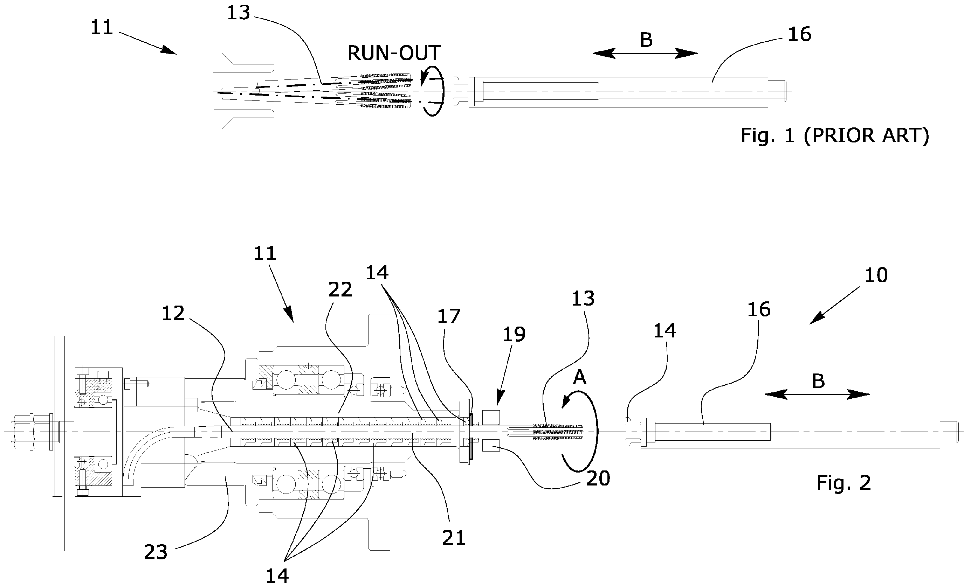

With reference to the appended figures, and initially in particular to figure 2, reference numeral 10 denotes in its entirety a tapping machine for realising threads on metallic nuts, comprising overall an anti-vibration and centring group according to the invention.

The tapping machine 10 comprises a spindle 11 which is directly or indirectly coupled to a servomotor connected to an electronic control unit provided with a suitable display.

A tapping tool 13 is rotatably mounted on the longitudinal axis 12 of the spindle 11 (see arrow A), which tapping tool 13 is provided, in the most external part thereof opposite the part in which it is fitted in the spindle, with a threading to be inserted inside a suitable hole fashioned in the metallic nuts 14 to be threaded.

The tapping machine 10 further comprises a pusher 16 which acts linearly (see arrow B) along the axis 12 identified by the spindle 11 to push a nut 14 against the threading surface of the tapping tool 13 with a predetermined force and velocity.

A further component part of the tapping machine and which collaborates with a centring and anti-vibration device, which will be described in the following, is represented by an anti-return device 17 of the nuts, which prevents the machined nuts 14 from returning towards the tapping zone where they would obstruct the anti-vibration and centring group.

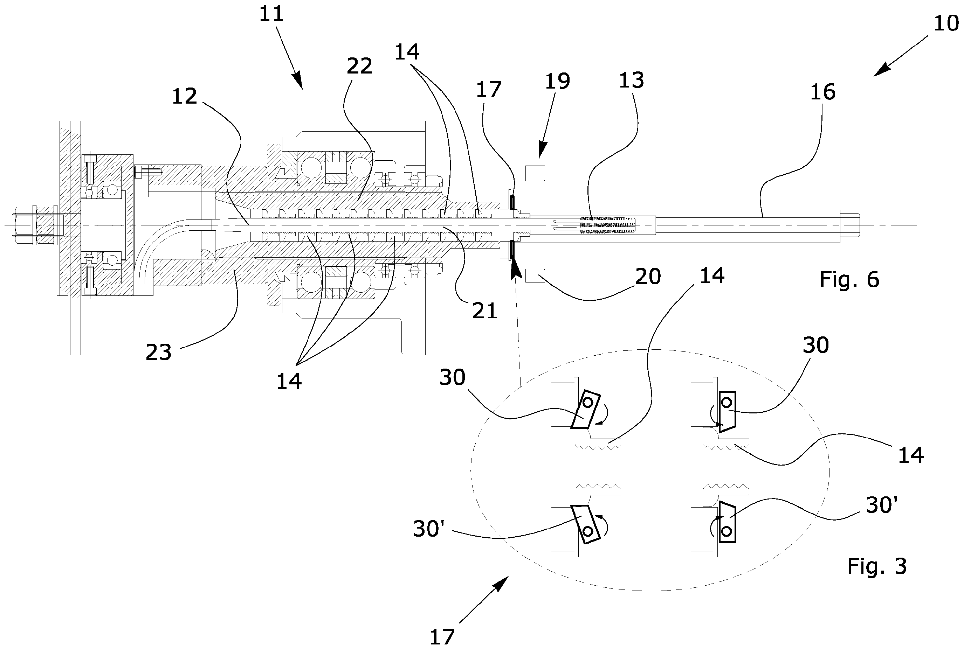

In an embodiment illustrated in figure 3, the anti-return device 17 comprises a pair of plates 30, 30' pivoted at an end thereof and which are adapted to selectively engage the edge of a nut 14 with the purpose of preventing return thereof.

In particular, the anti-return device 17 is located at the head of the spindle 11, i.e. on the end of the spindle from which the shaft of the tapping tool 13 emerges.

According to this embodiment, the anti-return device 17 is activated by the respective plates 30, 30' as movement members which bring the anti-return device 17 from an anti-return inserted position of the threaded nuts, to an outwardly-directed retracted position in order to enable passage of the threaded nuts, so that the nuts can be arranged in the sector downstream of the tapping tool so as to be ejected towards the collecting devices.

According to the invention, the anti-return system 17 of the threaded nuts is realised using a concept that depends on the geometry of the product on the basis of which the anti-return system can further be located in a suitable position with respect to the shaft of the tapping tool both downstream and upstream with respect to the anti-vibration device which will be described in the following, preventing the product from randomly going to occupy the work area of the anti-vibration tool which would otherwise obstruct the closure thereof and the centring of the stem of the tapping tool.

The invention includes use of an anti-vibration and centring group 19 which acts by contact on the tapping tool 13, constraining the tapping tool 13 by contact in a radial direction, but enabling freedom of rotation, so as to prevent the formation of vibrations and axial anomalous de-alignments.

In greater detail, the anti-vibration and centring group 19 is positioned on the tapping tool in a sector upstream of the spindle 11 and downstream of the threading zone in the advancement direction of the nuts, i.e. in the zone in which the tapping tool itself has a substantially smooth cylindrical surface.

In particular the anti-vibration and centring group 19 is positioned at the shaft of the tapping tool 13 between the threading zone of the tool itself and the head of the anti-return device 17 where the surface of the tapping tool is cylindrical and smooth.

The anti-vibration and centring group 19 comprises a gripping group 20, or pliers, which in a preferred embodiment comprises a pair of jaws reciprocally and specularly mobile, provided with semi-cylindrical cavities that are specular and symmetrical, which, during the steps in which the tool is about to be fitted on a nut under production, become arranged reciprocally moving towards one another up to contact with the shaft of the tapping tool 13, which is embraced while retaining freedom of axial rotation but is constrained with respect to displacements in a radial direction, so as to prevent any off-axis situations leading to vibrations.

According to further embodiments, the anti-return device 17 can have configurations and conformations that are different to those described, i.e. operatively associable to the pierced and already threaded object which must be held in a position downstream of the threading sector. As well as the classic nuts having a hexagonal head, pierced objects can be gripped that have, for example, circular, polyhedral or mixed shapes, so the anti-return device must be conceived and realised with a corresponding conformation.

A further characteristic of the invention is represented by the fact that the rotation shaft or stem 21 of the tapping tool 13 is arranged inside a fixed bushing 22 and activated by a hollow cylindrical rotation shaft 23, arranged inside the spindle 11.

This arrangement enables the pierced objects 14 that have been machined, which slide on the stem 21 towards the ejecting area positioned downstream, also to constitute further anti-vibration retaining elements due to the minimum tolerances which separate them from the fixed bushing 22 and from the shaft 21.

The presence of the fixed bushing 22 enables the centring pliers not to have to endure large "run-out" loads on the stem of the tapping tool and in this way become damaged or even worse not to have to be constructed with greater tolerances in order to be able to embrace a run-out tolerance of the tapping tool that is too great.

On the contrary, with the realising of this fixed bushing 22, easily replaceable, the tolerances of the anti-vibration and centring group 19 can be very strict and therefore precise, because the system with the fixed bushing 22 allows very small tolerances and minimises the run-out effect of the shaft 21 of the tapping tool 13 in the machining area of the anti-vibration and centring group 19.

With specific reference to figures 2, 4, 5 and 6, a description will now be made of the process according to the present invention.

Figure 2 illustrates an instantaneous position in which the nut 14 is about to be pushed at an adjustable velocity by the pusher 16 to the initial entry position towards the head of the tapping tool 13.

In this step both the anti-vibration and centring group 19, which remains locked on the shaft of the tapping tool 13 enabling a constrained rotation thereon, and the anti-return device 17 which prevents the already-threaded nuts which have slid downstream of the shaft from returning upstream, are in work position.

As can be intuited, the anti-return device 17 has the function of preventing the already-threaded nuts from interfering with the anti-vibration centring group 19.

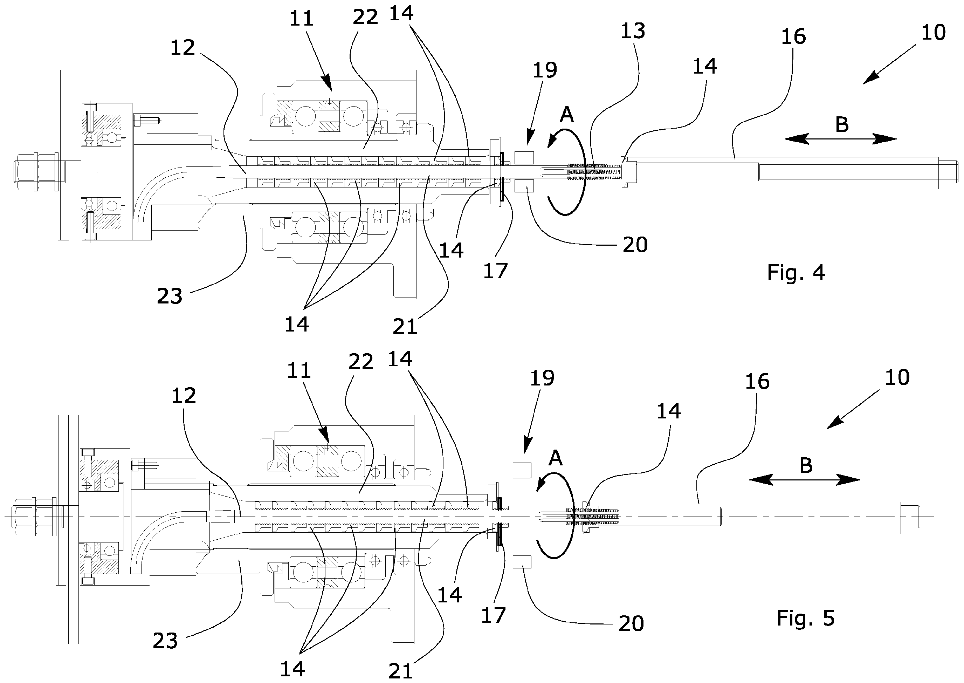

Figure 4 illustrates a second instantaneous position in which the nut 14, pushed by the pusher 16 with a predetermined force and velocity along the axis 12, and enters into contact with the end of the tapping tool to begin the threading thereof. In this step the anti-vibration and centring group 19 is still locked about the shaft of the tapping tool 13, while the anti-return device 17 retains the threaded nuts downstream of the shaft to prevent obstructing of the anti-vibration and centring group.

During the step, illustrated in figure 5, in which the effective threading of the nut takes place, the anti-vibration centring group 19 returns to the open position in which the jaws of the pliers open, moving from the shaft of the tapping tool 13, obtaining a condition in which the tapping tool remains constrained in the radial direction by the nut itself as it is machined.

As illustrated in figure 6, on termination of the threading both the anti-vibration and centring group 19 and the anti-return device 17 are in the open position, enabling each machined nut to advance downstream along the shaft of the tapping tool so as to be ejected towards the collecting member.

It can also be noted that the anti-vibration and centring group 19, as it enables a perfect stabilising of the tapping tool during the operating steps, can be positioned very near to the threading end and consequently can enable use of high-precision tapping tools with threading sectors having smaller dimensions than usual, in particular shorter threading sectors, making the system more compact, more efficient, more stable and more functional with respect to the traditional threading devices.

A further characteristic for correct operation of this system is the synchronism between the return of the moving assembly of pusher 16 and the activation of the closing of the anti-vibration centring group 19. The anti-return system guarantees each cycle the working space necessary for the anti-vibration and centring group 19.

On this matter, and as mentioned in the foregoing, the anti-return device 17 can be arranged both downstream and upstream with respect to the machining area of the anti-vibration and centring group 19, while remaining at all times synchronised with the activation of the anti-vibration and centring group 19.

In an important characteristic of the invention, the anti-vibration and centring group 19 is mobile in straight translation along a parallel direction to the longitudinal axis of the tapping tool 13.

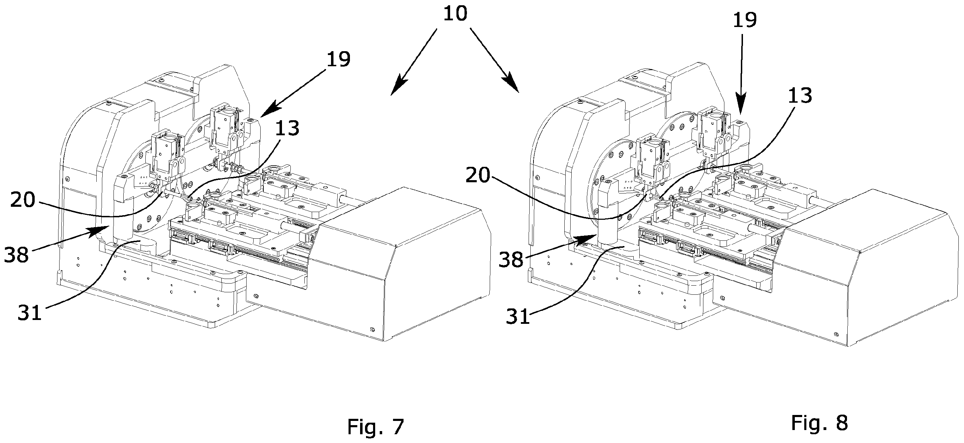

This characteristic is illustrated, in a first embodiment, in figures 7 and 8, where it can be observed that the centring group 19 is fixed to a frame having a portal conformation 38 which is provided with a pair of slides 31 (only one of which is illustrated in the figures) which are mobile in translation on longitudinal guides parallel to the longitudinal axis of the tapping tool 13. The longitudinal guides (not illustrated in the figures) are solidly constrained to a base and a support frame of the tapping machine.

More in particular, figure 7 illustrates a retracted position, with respect to the head of the tapping tool 13, the slides 31 of the portal of the anti-vibration and centring group 19.

More in particular, figure 8 illustrates an advanced position, with respect to the head of the tapping tool 13, of the slides 31 of the portal of the anti-vibration and centring group 19.

Figures from 9 to 11 illustrate three different possible positions of the anti-vibration and centring group19, according to three possible hypotheses of machining of metallic nuts.

In particular:

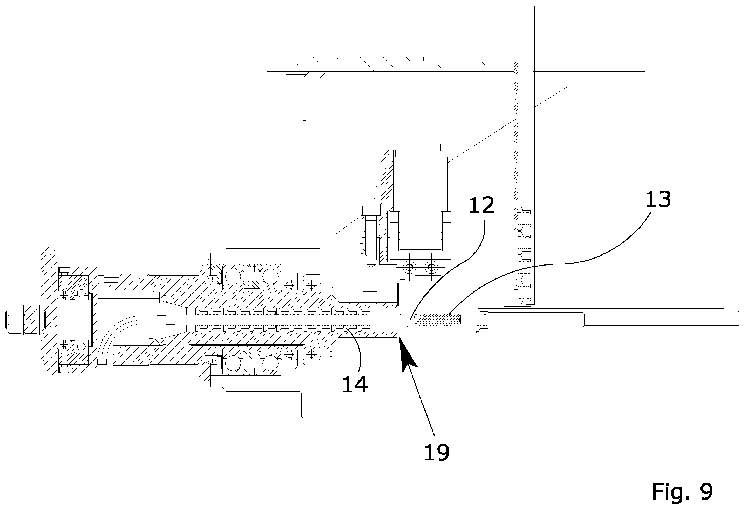

a) figure 9 illustrates an embodiment in which the length of the stem of the tapping tool is relatively short, the length of the head of the tapping tool is also relatively short and the group 19 is in an intermediate position;

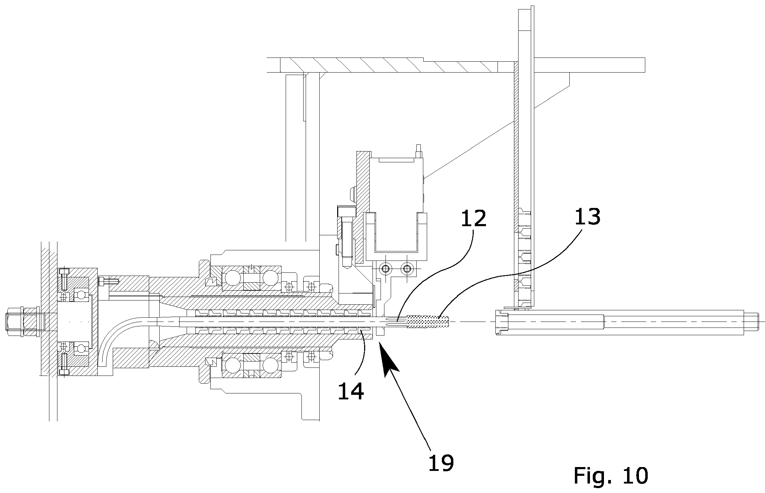

b) figure 10 illustrates an embodiment in which the length of the stem of the tapping tool is relatively short, the length of the head of the tapping tool is relatively long and the anti-vibration and centring group 19 is in a retracted position; and

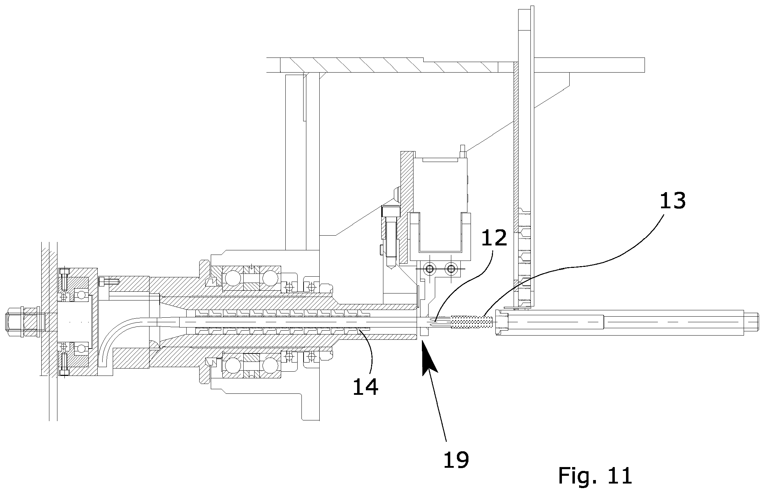

c) figure 11 illustrates an embodiment in which the length of the stem of the tapping tool is relatively long, the length of the head of the tapping tool is relatively short and the group 19 is in an advanced position.

The figures illustrate a first embodiment according to which the anti-vibration and centring group is mounted mobile on slides running on fixed guides to the base of the frame of the machine.

In a further embodiment (not illustrated in the figures) the anti-vibration and centring group according to the present invention is mounted on the carriage on which the pusher 16 is positioned, in this way enjoying the same advantages with respect to those obtainable with the first embodiment. These advantages are essentially constituted, with respect to the known solutions of the prior art, by the fact of constantly having a minimum projection of the tapping head in the machining zone, thus substantially contributing to the improving of the centring and, therefore, the better possible quality of the threading obtainable.

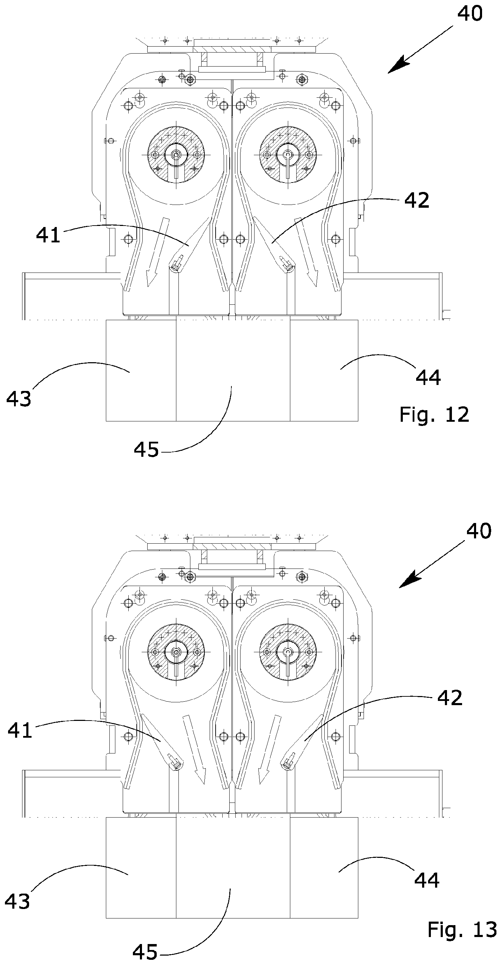

Figures 12 and 13 illustrate a further selector device 40 of the products in outlet, to be combined with a tapping machine provided with the anti-vibration and centring device according to the present invention. The presence of this device 40 derives from the need, on start-up of a production or during a tool-change operation, for the tapping tool to be initially loaded with a batch of non-threaded or worn nuts. The nuts are splined on the head of the tapping tool and this enables the tool to "float" inside the head of the spindle.

When production begins, the nuts used as primers are threaded and are the first to exit the machine; but they must be rejected on grounds of poor quality.

The selector 40 in this embodiment is provided with a pair of levers 41, 42 controllable for example pneumatically or hydraulically or electrically or in another way, which are displaced automatically from a first position, in which the nuts in outlet are directed towards a pair of stores 43, 44 of reject products (figure 12), to a second position in which the nuts in outlet are directed towards a store (45) of products destined for the final customer (figure 13).

The switching between the first and the second position of the levers 41, 42 of the selector (40) is preferably determined by use of an appropriate software which takes account of the number of nuts initially threaded.

Using the selector device 40 it is possible to obtain further advantages relating to working times (at present the selection operation described in the foregoing is carried out manually) and to the quality of the finished products.

From what is described and illustrated the advantages offered by the invention are clear, in which tapping machines mounting the anti-vibration and centring group according to the invention enable reducing the vibrations of the tapping tool to a minimum, which tool can be maintained on the interaxis of the hole of the product to be machined, which product is thus very precisely introduced into the tapping tool, guaranteeing an excellent machining from the start of the tapping.

This solution enables, as mentioned, obtaining excellent machining on various geometries of pierced products such as nuts, bushings, special products or more besides, and on very varied materials, even very tough ones such as stainless steel, or very soft ones such as aluminium, thus in all cases guaranteeing a higher quality of tapping from one hand and on the other hand a longer working life of the tool.

Further, this solution, which is able to obtain extremely precise machining conditions, further enables the use of long-lasting special tools which often have the drawback of not being usable on traditional machines as they are very fragile.

An example is a hard metal tool with a working life of about ten times more with respect to a tool used with traditional material, which can be used in combination with the anti-vibration centring group of the invention as it enables a reduction to a minimum of the vibrations at entry of the product to be machined, preventing chipping of the first threads of the tapping tool.

The invention has been described in the above with reference to a preferred embodiment thereof. However it is clear that the invention is susceptible to numerous variants which fall within the scope thereof, and which are technically equivalent.

## Claims

1. A tapping machine (10), for tapping perforated products such as nuts (14), bushings or the like, said tapping machine (10) comprising a spindle (11) on the longitudinal axis (12) of which a tapping tool (13) is rotatably mounted which tapping tool (13) is provided with a stem (21) having a longitudinal axis and a head having a threading to be inserted inside an appropriate hole afforded in a perforated product (14) to be threaded, said tapping machine (10) further comprising pusher devices (16) for pushing a perforated product (14) against the threading surface of the tapping tool (13), said machine further comprising an anti-vibration centring group (19) which acts by contact on the stem of the tapping tool (13), substantially constraining the tapping tool (13) in a radial direction, preventing a de-alignment of the longitudinal axis (12) of the stem of the tapping tool and maintaining freedom of rotation thereof, the machine being **characterised in that** the anti-vibration centring group (19) comprises a gripping group (20) provided with a pair of jaws able to close about the external surface of the stem of the tapping tool (13) without blocking the rotary movement of the stem (21), whereby the gripping group (20) is selectively movable along the stem of the tapping tool (13) in a parallel direction to the longitudinal axis of said stem (21), **in that** it further comprises an easily replaceable fixed bushing (22), arranged inside the spindle (11), arranged with very strict tolerances about the machined perforated products (14) which are configured to be displaced on the stem (21) of the tapping tool (13), with the aim of further preventing vibrations on the stem of the tapping tool (13), and **in that** it further comprises an anti-return device (17) of the nuts, which is configured to prevent the machined perforated products (14) from returning towards the tapping zone.

2. A tapping machine (10) according to claim 1, **characterised in that** said jaws are reciprocally and specularly mobile.

3. A tapping machine (10) according to claim 1, **characterised in that** said anti-return device (17) comprises a laterally pivoted pair of plates (30, 30'), cooperating for selectively engaging an edge of a nut (14).

4. A tapping machine (10) according to any one of claims 1 and 3, **characterised in that** said anti-return device (17) is located at the head of the spindle (11), i.e. on the end of the spindle from which the tapping tool (13) emerges, and is activated by movement members which bring the anti-return device (17) from a retaining anti-return inserted position of the threaded nuts, to a retracted position with respect to outside in order to enable passage of the threaded nuts along the tapping tool.

5. A tapping machine (10) according to any one of the preceding claims, **characterised in that** said anti-vibration centring group (19) is fixed to a frame having a portal conformation (38) which is provided with a pair of slides (31) which are mobile in translation on longitudinal guides parallel to the longitudinal axis of the tapping tool (13).

6. A tapping machine according to claim 5, **characterised in that** said longitudinal guides are solidly constrained to a base and a support frame of the tapping machine.

7. A tapping machine of any one of claims from 1 to 4, **characterised in that** the anti-vibration and centring group (19) is mounted on a carriage on which the pusher devices (16) are positioned.

8. A tapping machine according to any one of the preceding claims, **characterised in that** it further comprises a selector device (40) arranged at the terminal end of the stem (21) of the tapping tool (13), and comprising a pair of levers (41, 42) pneumatically or hydraulically or electrically controllable, which are automatically displaced from a first position, in which the nuts in outlet are directed towards at least a store (43, 44) for reject products, to a second position in which the nuts in outlet are directed towards at least a store (45) of finished products.

9. A tapping machine according to claim 8, **characterised in that** the switching between the first and the second position of said levers (41, 42) of said selector device (40) is determined by use of an appropriate software.

## Patentansprüche

1. Gewindeschneidmaschine (10) zum Gewindeschneiden von perforierten Produkten wie Muttern (14), Buchsen oder dergleichen, wobei die Gewindeschneidmaschine (10) eine Spindel (11) umfasst, auf deren Längsachse (12) ein Gewindeschneidwerkzeug (13) drehbar montiert ist, wobei das Gewindeschneidwerkzeug (13) mit einem Schaft (21) versehen ist, der eine Längsachse und einen Kopf mit einem Gewinde aufweist, der in ein geeignetes Loch einzuführen ist, das in einem perforierten Produkt (14) vorhanden ist, in das ein Gewinde zu schneiden ist, wobei die Gewindeschneidmaschine (10) ferner Schiebevorrichtungen (16) umfasst, um ein perforiertes Produkt (14) gegen die Gewindefläche des Gewindeschneidwerkzeugs (13) zu schieben, wobei die Maschine ferner eine Antivibrations-Zentriergruppe (19) umfasst, die durch Kontakt auf den Schaft des Gewindeschneidwerkzeugs (13) einwirkt, wobei sie das Gewindeschneidwerkzeug (13) in einer radialen Richtung im Wesentlichen hält, eine Ausrichtungsabweichung der Längsachse (12) des Schafts des Gewindeschneidwerkzeugs verhindert und dessen Drehfreiheit aufrechterhält, wobei die Maschine **dadurch gekennzeichnet ist, dass** die Antivibrations-Zentriergruppe (19) eine Greifgruppe (20) umfasst, die mit einem Paar Backen versehen ist, die in der Lage sind, sich um die äußere Fläche des Schafts des Gewindeschneidwerkzeugs (13) zu schließen, ohne die Drehbewegung des Schafts (21) zu blockieren, wodurch die Greifgruppe (20) selektiv entlang des Schafts des Gewindeschneidwerkzeugs (13) in einer parallelen Richtung zu der Längsachse des Schafts (21) beweglich ist, dadurch, dass sie ferner eine leicht austauschbare feste Buchse (22) umfasst, die im Inneren der Spindel (11) angeordnet ist, die mit sehr engen Toleranzen um die bearbeiteten perforierten Produkte (14) herum angeordnet ist, die eingerichtet sind, um auf dem Schaft (21) des Gewindeschneidwerkzeugs (13) verschoben zu werden, mit dem Ziel, Vibrationen auf dem Schaft des Gewindeschneidwerkzeugs (13) weiter zu verhindern, und dadurch, dass sie ferner eine Rücklaufsicherungsvorrichtung (17) der Muttern umfasst, die eingerichtet ist, um zu verhindern, dass die bearbeiteten perforierten Produkte (14) in Richtung der Gewindeschneidzone zurückkehren.

2. Gewindeschneidmaschine (10) nach Anspruch 1, **dadurch gekennzeichnet, dass** die Backen wechselseitig und spiegelbildlich beweglich sind.

3. Gewindeschneidmaschine (10) nach Anspruch 1, **dadurch gekennzeichnet, dass** die Rücklaufsicherungsvorrichtung (17) ein seitlich drehbar gelagertes Paar Platten (30, 30') umfasst, die zusammenwirken, um selektiv mit einem Rand einer Mutter (14) in Eingriff zu kommen.

4. Gewindeschneidmaschine (10) nach einem der Ansprüche 1 und 3, **dadurch gekennzeichnet, dass** sich die Rücklaufsicherungsvorrichtung (17) an dem Kopf der Spindel (11) befindet, d. h. an dem Ende der Spindel, aus dem das Gewindeschneidwerkzeug (13) austritt, und durch Bewegungselemente aktiviert wird, die die Rücklaufsicherungsvorrichtung (17) aus einer zurückhaltenden eingeführten Rücklaufsicherungsposition der Gewindemuttern in eine zurückgezogene Position in Bezug auf eine Außenseite bringen, um einen Durchgang der Gewindemuttern entlang des Gewindeschneidwerkzeugs zu ermöglichen.

5. Gewindeschneidmaschine (10) nach einem der vorhergehenden Ansprüche, **dadurch gekennzeichnet, dass** die Antivibrations-Zentriergruppe (19) an einem Rahmen mit einer Portalform (38) befestigt ist, der mit einem Paar Schiebern (31) versehen ist, die auf Längsführungen parallel zu der Längsachse des Gewindeschneidwerkzeugs (13) verschiebbar sind.

6. Gewindeschneidmaschine nach Anspruch 5, **dadurch gekennzeichnet, dass** die Längsführungen fest an einer Basis und einem Trägerrahmen der Gewindeschneidmaschine gehalten sind.

7. Gewindeschneidmaschine nach einem der Ansprüche 1 bis 4, **dadurch gekennzeichnet, dass** die Antivibrations- und Zentriergruppe (19) auf einem Schlitten montiert ist, auf dem die Schiebevorrichtungen (16) positioniert sind.

8. Gewindeschneidmaschine nach einem der vorhergehenden Ansprüche, **dadurch gekennzeichnet, dass** sie ferner eine Wählvorrichtung (40) umfasst, die an dem Abschlussende des Schafts (21) des Gewindeschneidwerkzeugs (13) angeordnet ist und ein Paar Hebel (41, 42) umfasst, die pneumatisch oder hydraulisch oder elektrisch steuerbar sind, die automatisch von einer ersten Position, in der die Muttern in einem Auslass in Richtung mindestens eines Lagers (43, 44) für Ausschussprodukte gerichtet sind, in eine zweite Position verschoben werden, in der die Muttern in einem Auslass in Richtung mindestens eines Lagers (45) von Fertigprodukten gerichtet sind.

9. Gewindeschneidmaschine nach Anspruch 8, **dadurch gekennzeichnet, dass** das Umschalten zwischen der ersten und der zweiten Position der Hebel (41, 42) der Wählvorrichtung (40) durch eine Verwendung einer geeigneten Software bestimmt wird.

## Revendications

1. Machine à tarauder (10), pour tarauder des produits perforés tels que des écrous (14), des douilles ou autres, ladite machine à tarauder (10) comprenant une broche (11) sur l'axe longitudinal (12) de laquelle un outil de taraudage (13) est monté rotatif, lequel outil de taraudage (13) est pourvu d'une tige (21) ayant un axe longitudinal et une tête ayant un filetage à insérer à l'intérieur d'un trou approprié ménagé dans un produit perforé (14) à tarauder, ladite machine à tarauder (10) comprend en outre des dispositifs de poussée (16) pour pousser un produit perforé (14) contre la surface de filetage de l'outil de taraudage (13), ladite machine comprenant en outre un groupe de centrage anti-vibration (19) qui agit par contact sur la tige de l'outil à tarauder (13), contraignant substantiellement l'outil de taraudage (13) dans une direction radiale, empêchant un désalignement de l'axe longitudinal (12) de la tige de l'outil de taraudage et maintenant sa liberté de rotation, la machine est **caractérisée en ce que** le groupe de centrage anti-vibration (19) comprend un groupe de préhension (20) muni d'une paire de mâchoires capables de se refermer sur la surface externe de la tige de l'outil de taraudage (13) sans bloquer le mouvement rotatif de la tige (21), le groupe de préhension (20) étant sélectivement mobile le long de la tige de l'outil de taraudage (13) dans une direction parallèle à l'axe longitudinal de ladite tige (21), **en ce qu'**il comprend en outre une douille fixe (22) facilement remplaçable, disposée à l'intérieur de la broche (11), disposée avec des tolérances très strictes autour des produits perforés (14) usinés qui sont configurés pour être déplacés sur la tige (21) de l'outil de taraudage (13), dans le but de prévenir davantage les vibrations de la tige de l'outil de taraudage (13), et **en ce qu'**il comprend en outre un dispositif anti-retour (17) des écrous, qui est configuré pour empêcher les produits perforés (14) usinés de retourner vers la zone de taraudage.

2. Machine à tarauder (10) selon la revendication 1, **caractérisée en ce que** lesdites mâchoires sont mobiles réciproquement et spéculairement.

3. Machine à tarauder (10) selon la revendication 1, **caractérisée en ce que** ledit dispositif anti-retour (17) comprend une paire de plaques (30, 30') pivotant latéralement, coopérant pour engager sélectivement un bord d'un écrou (14).

4. Machine à tarauder (10) selon l'une quelconque des revendications 1 et 3, **caractérisée en ce que** ledit dispositif anti-retour (17) est situé à la tête de la broche (11), c'est-à-dire à l'extrémité de la broche d'où émerge l'outil de taraudage (13), et est activé par des organes de mouvement qui amènent le dispositif anti-retour (17) d'une position de retenue anti-retour insérée des écrous filetés, à une position rétractée par rapport à l'extérieur afin de permettre le passage des écrous filetés le long de l'outil de taraudage.

5. Machine à tarauder (10) selon l'une quelconque des revendications précédentes, **caractérisée en ce que** ledit groupe de centrage anti-vibration (19) est fixé à un châssis à portique à conformation (38) muni d'une paire de glissières (31) mobiles en translation sur des guides longitudinaux parallèles à l'axe longitudinal de l'outil de taraudage (13).

6. Machine à tarauder selon la revendication 5, **caractérisée en ce que** lesdits guides longitudinaux sont solidement contraints à une base et à un cadre de support de la machine à tarauder.

7. Machine à tarauder selon l'une quelconque des revendications 1 à 4, **caractérisée en ce que** le groupe de centrage et d'anti-vibration (19) est monté sur un chariot sur lequel sont positionnés les dispositifs de poussée (16).

8. Machine à tarauder selon l'une quelconque des revendications précédentes, **caractérisée en ce qu'**elle comprend en outre un dispositif sélecteur (40) disposé à l'extrémité terminale de la tige (21) de l'outil de taraudage (13), et comprenant une paire de leviers (41, 42) à commande pneumatique ou hydraulique ou électrique, qui sont automatiquement déplacés d'une première position, dans laquelle les écrous en sortie sont dirigés vers au moins un magasin (43, 44) de produits rebutés, à une seconde position dans laquelle les écrous en sortie sont dirigés vers au moins un magasin (45) de produits finis.

9. Machine à tarauder selon la revendication 8, **caractérisée en ce que** la commutation entre la première et la deuxième position desdits leviers (41, 42) dudit dispositif sélecteur (40) est déterminée par l'utilisation d'un logiciel approprié.
